# EUROPEAN PATENT SPECIFICATION

(11) **EP 1 697 802 B1**
(45) Date of publication and mention of the grant of the patent: **20.04.2011**
(21) Application number: 04804214.7
(22) Date of filing: 22.12.2004
(51) Int. Cl.: G05B 19/042, G05B 19/418

(54) **METHOD AND SYSTEM FOR AUTOMATED CONFIGURING OF A HART MULTI-DROP SYSTEM**
VERFAHREN UND SYSTEM ZUM AUTOMATISIERTEN KONFIGURIEREN EINES HART-MEHRFACHAUSKOPPLUNGSSYSTEMS
PROCEDE ET SYSTEME DE CONFIGURATION AUTOMATIQUE D'UN SYSTEME MULTIPOINT HART

(30) Priority: 22.12.2003 US 532013 P
(43) Date of publication of application: 06.09.2006
(73) Proprietor: VEGA Grieshaber KG, 77709 Wolfach (DE)
(72) Inventor: SCHAETZLE, Ralf, 77716 Fischerbach (DE)
(74) Representative: Dilg, Andreas
(86) International application number: PCT/EP2004/014618
(87) International publication number: WO 2005/062140

(56) References cited:
- DE-A1- 4 441 752
- DE-A1- 19 733 906
- MUELLER W: "DAS HART-FELD-KOMMUNIKATIONS-PROTOKOLL" AUTOMATISIERUNGSTECHNISCHE PRAXIS - ATP, OLDENBOURG VERLAG. MUNCHEN, DE, vol. 34, no. 9, 1 September 1992 (1992-09-01), pages 518-520,521, XP000311930 ISSN: 0178-2320
- "Gebrauchsanweisung IR - Type 334" February 2002 (2002-02), DRÄGER , GERMANY , XP002332894 page 8 - page 9 page 17 page 47 - page 48
- ANONYMOUS: "HART, Field Communications Protocol, Application Guide" HART FIELD COMMUNICATIONS PROTOCOL APPLICATION GUIDE, 1999, pages 1-79, XP002219606
- Bedienungsanleitung IBIS für den HART Stellungsregler Typ 3780, Programm-Version 2.20, Ausgabe Juni 1999, SAMSON AG XP002344983

## Description

### TECHNICAL FIELD

The present invention relates to a method of automatically configuring a so-called HART multidrop system, comprising a master device and a plurality of slave devices connected to the at least one master device. Moreover, the present invention relates to a HART multidrop system customized for the implementation of the method according to the present invention.

### BACKGROUND OF THE INVENTION

A HART multidrop system basically consists of one or two master devices and a plurality of slave devices connected to the at least one master device. The slave devices are also referred to as field devices and can comprise various sensors, actuators or other devices, such as a handheld device. In particular, such slave devices are filling level sensors, pressure or temperature sensors or flow-through sensors.

The slave devices are connected to the at least one master device through a so-called 4 to 20 mA two-wire loop. The communication between the master device and the slave devices is carried out using the well-known HART protocol. Regarding the HART protocol, particular reference is made to the publication "HART-field Communications Protocol, A Technical Overview (Second Edition), Romilly Bowden, September 2003, Emerson Process Management". This specification of the HART protocol is sold by Fisher-Rosemount Ltd. and is generally commercially available.

In a HART multidrop system, a master device usually takes care of the energy supply of the slave devices, and communication with the connected slave devices is carried out through the master device. Slave devices for a HART system are usually adapted in such a way that they can be operated with a maximum feed current of 20 mA. This is the maximum current which can be supplied by a master device when the communication between the master device and a slave device is analog, i.e. when the current fed by the slave device into the two-wire loop is proportional to the measured signal. When there is a plurality of slave devices, the communication with the master device is digital. Herein the feeding current is reduced to 4 mA. The slave devices thus have a first mode in which they are in analog communication with the master device and a second mode (multidrop mode) in which they communicate digitally with the master device and wherein the operation is such that each slave device is operable with a feeding current of 4 mA.

In conventional HART multidrop systems, each slave device has to be switched over to the multidrop mode on site by the operator. This can be particularly troublesome when the several slave devices are at a particularly great distance from the master device or when the slave devices are placed at great distances to each other. In a production process, for example, the filling levels, temperatures and pressures may have to be checked in various storage tanks, wherein the storage tanks may be positioned, however, at several tens or hundreds of meters or more from each other. In order to configure such a HART multidrop system, an operator must connect each individual slave device to the system and switch it over to the multidrop mode on site. This time-consuming process must also be carried out before the HART multidrop system is put into operation.

### SUMMARY OF THE INVENTION

According to a first aspect of the present invention, a method of automatically configuring a HART multidrop system consisting of at least one master device and a plurality of slave devices, comprises the following process steps. According to this first aspect of the present invention, a system is newly created: the slave devices are connected to the multidrop system. Once the slave devices are connected to the master device, the power source present in the master device for the supply of the slave devices is switched on. At the same time or after this, HART command No. 6 "write polling address" is sent as a broadcast command. By sending command No. 6 as a broadcast command, all slave devices in the HART multidrop system are addressed and switched into the multidrop mode. As an address for the slave devices, a polling address not equal to 0 (i.e., according to the present state of the art, integer values between 1 and 15, as specified by the HART protocol) is assigned by command No. 6. As a result, all slave devices have now assumed the multidrop mode, but they all have the same address. Then it has to be ensured that each of the slave devices present in the HART multidrop system obtains a unique address and a unique identifier. This can be done in either of two ways, which will be explained below.

According to a second aspect of the present invention, an existing HART multidrop system comprising one or more slave devices is complemented by at least one more slave device. For this purpose, at least one additional slave device is connected to the existing HART multidrop system. Once all slave devices are connected, the power source present in the master device is switched off, if indeed it is still switched on, and then it is switched on again, as soon as the slave devices are isolated from the voltage or the current. At the same time or after this, the HART command No. 6 "write polling address" is sent as a broadcast command. By sending command No. 6 as a broadcast command, all slave devices of the HART multidrop system are addressed and switched into multidrop mode. As an address for the slave devices, a polling address not equal to 0 (i.e., according to the present state of the art, integer values between 1 and 15, as specified by the HART protocol) is assigned by command No. 6. With this, all slave devices have now assumed the multidrop mode, but they all have the same address. Then it has to be ensured that each of the slave devices present in the HART multidrop system obtains a unique address and a unique identifier.

The assignment of a unique polling address and/or a unique identifier can be carried out, for example, as follows. For example, the unique identifier for a slave device is queried via a programmed routine, which the operator can then enter manually, and a polling address is also queried (a number between 1 and 15), which the operator has to input. As a modification it is also possible for the polling address to be automatically assigned after the identifier is input, which means that the operation does not need to enter a corresponding polling address. Then command No. 6 with the long frame address corresponding to the input identifier is transmitted together with the now determined polling address of the slave device. The slave device, which is now uniquely addressed by the long frame address, thus obtains the new assigned polling address. This process is repeated for all connected slave devices. Finally, all slave devices have a determined address (1 to 15) and are individually addressable by the master device through the unique identifier.

Alternatively, the whole process can be partially or wholly automated. For this purpose, the unique identifier for each connected slave device is automatically taken from a previously determined database and the polling address is automatically assigned. The long frame address created in this manner and command No. 6 with the polling address determined for a certain slave device are thus automatically transmitted. In other words: the system checks which slave devices are connected to the multidrop system and automatically assigns a specific address for each of the slave devices, which can be a number between 1 and 15 (as presently specified by the HART protocol). If an address, such as 2, has already been assigned, an address which has not yet been assigned, is automatically assigned, in particular, the next higher address. Finally, all slave devices connected to the master device have now obtained their unique polling addresses and are individually recognizable.

For more detail on how automatic processes for the assignment of addresses can be carried out, reference is made to DE 102 02 851 A1 (US 2003140125 or EP 1331794) to avoid undue repetition. Here, an example of a method of assigning addresses in a network component is explained in detail. Moreover, other well-known automatic address assignment techniques may also be used in the present HART multidrop system.

Due to the fact that according to the present state of the art, HART communication is relatively slow, the above explained semi-automatic address assignment method is preferred over the above explained fully automatic address assignment method.

In another exemplary embodiment of the present invention, it is checked before the power source is turned on again in the master device to supply the slave devices, whether the slave devices are indeed without voltage or current. In other words, it is checked whether the supply voltage or the supply current in the master device for the supply of the slave devices is about 0, i.e. that the current is < 4 mA or < 3.6 mA in particular.

Alternatively, the renewed switching on of the power source can take place after a predetermined time interval after the power source has been turned off. The time interval is chosen in such a way that it is ensured that before the power source for the slave devices is turned on again, no voltage is applied or no appreciable current is available.

In another exemplary embodiment of the present invention, for reassigning an address to the slave devices after their switch-over into the multidrop mode, a unique address of between 1 and 15 can be inputted for each slave device by the operator. The unique address for each slave device can be obtained by way of an inquiry, or obtained from a database.

Another exemplary embodiment of the present invention provides that before the unique address for a slave device is input it is queried whether the slave device has been configured before, and if so, the same address of this slave device is assigned again. Thus, if the unique identifier of a slave device and the address (a value between I and 15) are known, they are transmitted in a long frame address with HART command No. 6 so that a slave device uniquely identified by the unique identifier now also obtains its own polling address.

The unique identifier for a slave device can be the serial number of the slave device and the manufacturer ID code and a so-called device type code. With these three features, a unique long frame address can be formed, and therefore a single slave device can be directly addressed. By using HART command No. 6 into which this unique long frame address is integrated, a unique polling address (1-15) can be assigned to that specific slave device which is different from the identical address (polling address) that was the same for all slave devices.

According to another aspect of the present invention, a HART multidrop system comprises at least one master device which has a power source to supply the slave devices, and a plurality of slave devices connected to the at least one master device. Moreover, a control unit is also present which for the purpose of automatically configuring the HART multidrop system switches off the power source of the master device, if it is still switched on when the slave devices are connected, and which hereafter switches back on again the power source in the master device for the supply of the slave devices. The control unit, after the renewed switching on, sends the HART command "write polling address" as a broadcast command with a polling address not equal to zero, which causes all slave devices connected to the master device to be automatically switched over to the multidrop mode. All slave devices thus obtain the identical address not equal to zero. The control unit also has the function of changing the identical address of all slave devices caused by the transmission of the above broadcast command into a unique address for each slave device, either fully automatically or in an inquiry routine in combination with an operator input. For this purpose, advantageously an input unit is present for the operator. It is also advantageous if a display unit is present, on which the values or data to be input by the operator are inquired after.

### SHORT DESCRIPTION OF THE DRAWINGS

For further explanation and for better understanding, several exemplary embodiments of the present invention are described below with reference to the accompanying drawings, in which:
- Fig. 1: shows a basic structure of a HART multidrop system;
- Fig. 2a: shows a first part of a flow diagram of a process routine with the aid of which the slave devices in a HART multidrop system are automatically switched over to the multidrop mode;
- Fig. 2b: shows a flow chart of a process routine showing an option to assign addresses to already configured sensors after the switchover into the multidrop mode;
- Fig. 2c: shows another flow chart of a process routine to assign addresses to not yet configured sensors and to assign them to a measuring position;
- Fig. 3: illustrates dialog 1 mentioned in Fig. 2 as displayed on a display unit to an operator (such as on the master device);
- Fig. 4: illustrates dialog 2 mentioned in Fig. 2 as displayed on a display unit to an operator;
- Fig. 5: illustrates dialog 3 mentioned in Fig. 2 as displayed on a display unit to an operator;
- Fig. 6: illustrates dialog 4 mentioned in Fig. 2 as displayed on a display unit to an operator;
- Fig. 7: illustrates dialog 5 mentioned in Fig. 2 as displayed on a display unit to an operator;
- Fig. 8: illustrates dialog 6 mentioned in Fig. 2 as displayed on a display unit to an operator on the master device;
- Fig. 9: illustrates dialog 7 mentioned in Fig. 2 as displayed on a display unit to an operator on the master device;
- Fig. 10: illustrates dialog 8 mentioned in Fig. 2 as displayed on a display unit to an operator on the master device.

### DESCRIPTION OF EXEMPLARY EMBODIMENTS OF THE INVENTION

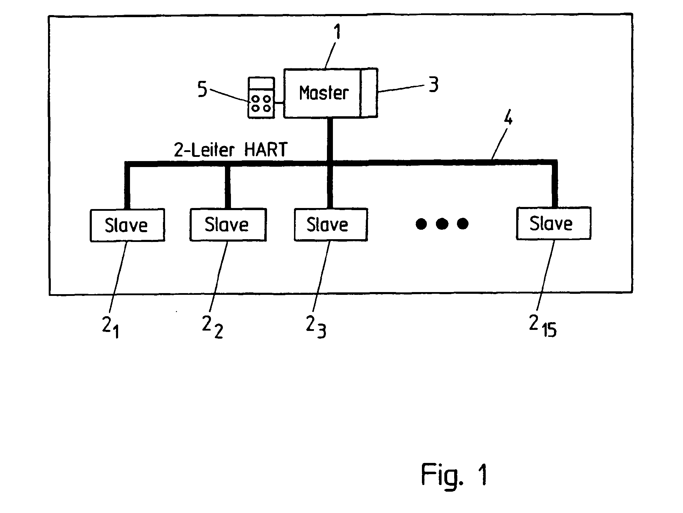

With reference to Fig. 1, the basic structure of a HART multidrop system is shown. The HART multidrop system comprises a master device 1, to which a plurality of slave devices 2₁ ... 2₁₅ may be connected via a two-wire line 4. Master device I communicates with slave devices 2₁ ... 2₁₅ via the two-wire loop 4 and supplies energy to them. The communication between master device 1 and slave devices 2₁ ... 2₁₅ is carried out using commands known from the HART protocol. Slave devices 2₁ ... 2₁₅ in turn, again using the HART protocol, send information to master device 1 when they are addressed.

For the communication between master device 1 and a specific slave device 2, ... 2₁₅, each slave device 2₁ ... 2₁₅ has both a unique identifier and a specific address (polling address). The unique identifier can consist of the serial number and/or the manufacturer ID code and/or the device type code. Other characterizing features of a slave device 2₁ ... 2₁₅ may, of course, also be used for unique identification. A unique long frame address is then formed using these features, which serve to address a specific slave device 2₁ ... 2₁₅. The so-called polling address is a number between 1 and 15. A polling address 0 means that the device is not in the multidrop mode.

As shown in Fig. 1, master device I comprises a power source 3 used to supply energy to the slave devices. In the exemplary embodiment shown here, an input and display unit 5 is connected to master device 1. However, it is also possible not to connect input and display unit 5 to master device 1, but at any place on wire line 4. For more details of the input and display unit, reference is made to the explanations below.

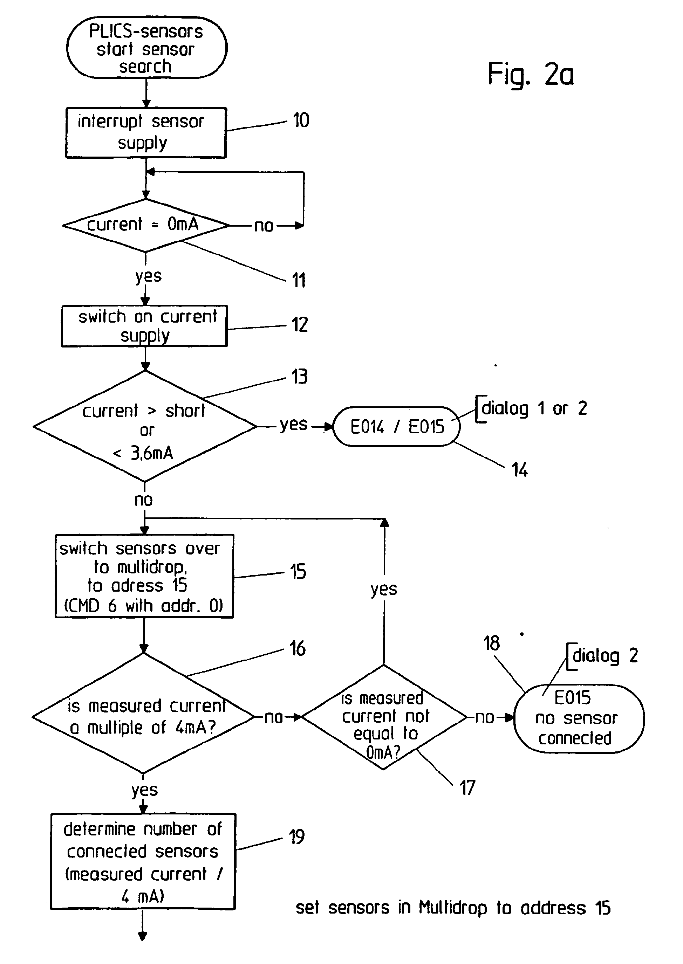

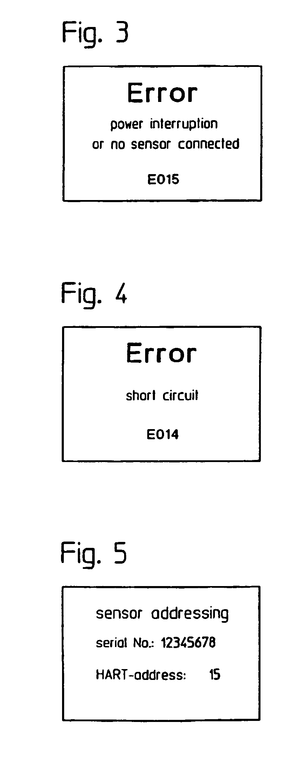

Figs. 2a to 2c show the basic flow charts which illustrate the basic sequence of the method according to the present invention or of parts thereof. In the flow chart shown in Fig. 2a, the various slave devices 2₁ ... 2₁₅ are switched over to the multidrop mode and all set to the same address (polling address). The sensor supply 3 in master device 1 is switched off in step 10. In step 11 it is checked whether the current for the slave devices 2₁ ... 2₁₅ is 0 mA. Alternatively it may also be checked whether the voltage is 0 Volts. If it is determined that the current or voltage is not about 0 mA or 0 Volts, respectively, the sensor supply is not switched back on, otherwise the power source 3 in master device 1 is turned on again in step 12. Then it is checked in an optional step 13 whether there is a short circuit or whether the current in the two-wire loop 4 is less than 3.6 mA. If the answer to either is yes, an error message 14 is output. The error message can be seen on the display and input unit 5 according to Figs. 3 or 4.

If there is no short circuit or if the current is greater than 3.6 mA, step 15 is next. The slave devices 2₁ ... 2₁₅ are set to the polling address 15 by HART command No. 6 as a broadcast command. By transmitting command No. 6 as a broadcast command with a polling address not equal to zero, all slave devices are addressed via this command and obtain the same polling address 15.

In optional step 16 it is determined whether the current in the two wire line 4 is a multiple of 4 mA. If this is not the case, it is determined in step 17 whether the measured current is not equal to 0 mA. If the answer is yes, step 15 is repeated. If this is not the case, the output in step 18 is that no sensor is connected. The corresponding dialog is shown on the input and display unit 5 according to Fig. 3.

If it is determined in step 16 that the measured current is indeed a multiple of 4 mA, the number of connected slave devices is determined in step 19 by dividing the measured current by 4 mA.

With this, the basic sequence of process steps for the automatic operation of a plurality of slave devices 2₁ ... 2₁₅ in a HART multidrop system is complete, with all slave devices 2₁ ... 2₁₅ still having polling address 15, however.

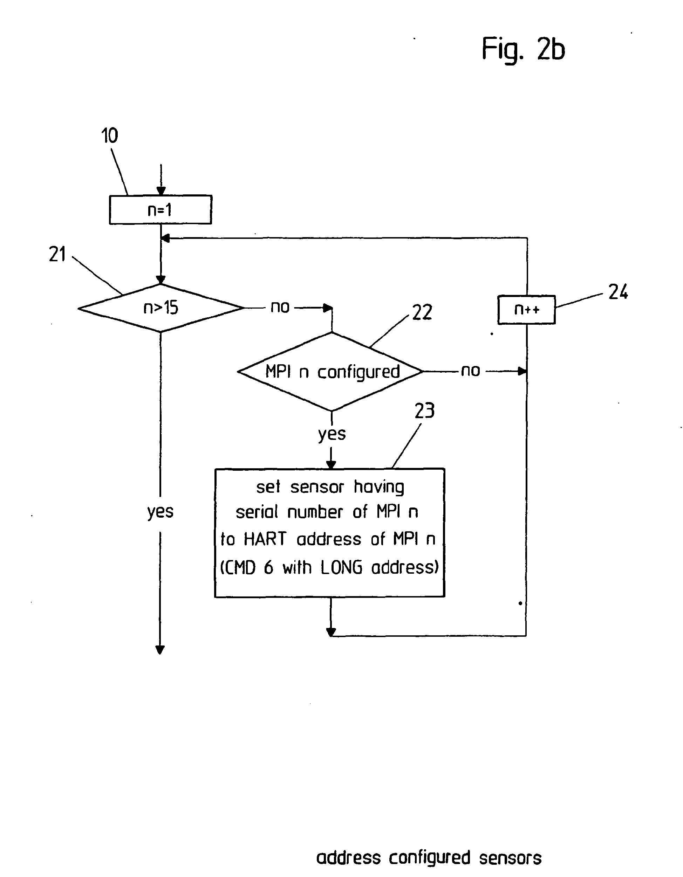

In the optional routine shown in the flow diagram according to Fig. 2b, it is checked whether already configured sensors exist and whether these configured sensors have to be given new addresses. For this purpose, a counter n is set to the value 1 in step 20. It is checked in step 21 whether the value is greater than 15. If this is not the case, the measuring place having value n is checked in step 22 as to whether it is already configured. If so, HART command No. 6 with the long frame address is determined in step 22, wherein the measuring place having the value n is set to the HART address of measuring place n. Then value n is incremented by 1 in step 24. This loop is cycled through until all configured measuring places have been recorded. This means that loop 21 is interrupted as soon as value n is greater than 15.

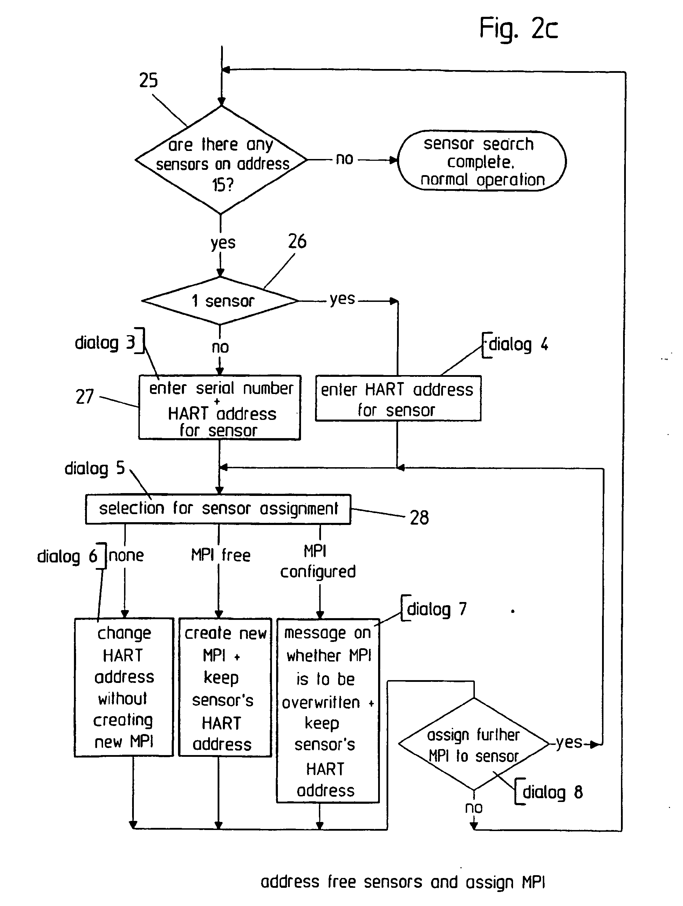

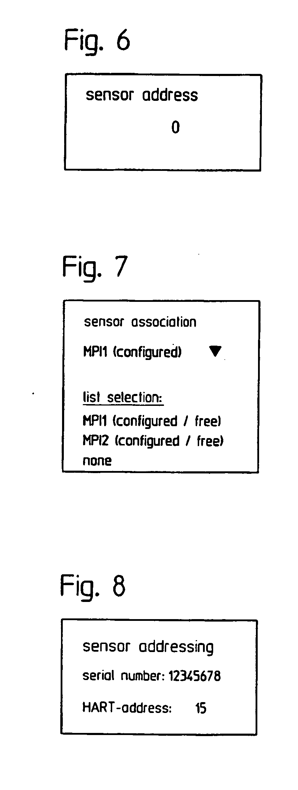

Fig. 2c illustrates the addressing of the slave devices 2₁ ... 2₁₅ which have not been given a unique polling address before. It is determined in step 25 whether there are still slave devices having the address 15. If this is not the case, the sensor addressing is completed according to step 25 and normal operation of the HART multidrop system is initiated. If there are still slave devices 2₁ ... 2₁₅ with an address 15, the operator is prompted in step 27 to input the serial number and the desired polling address for the slave device. The corresponding dialog is shown in Fig. 5. Then in step 28 the selection of the sensor assignment is carried out. The corresponding dialog which is displayed on the display and input unit 5 is shown in Fig. 7.

In step 26 it is checked whether only one slave device remains which has not yet been assigned a unique polling address. If the result of this checking is that only one slave device still has the polling address which was assigned to all slave devices, the routine according to the dialog 4, i.e. Fig. 6, can be completed. According to this dialog, the user can assign a not yet assigned address to the remaining slave device or it leaves the already assigned polling address. This last slave device does not necessarily have to obtain a unique identifier like the others according to the description below.

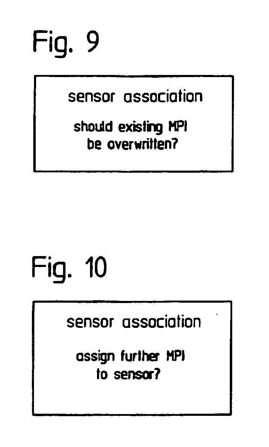

The operation follows step 29 if no selection is to be made. The operation follows step 30 if the measuring place is free. If the measuring place has already been configured, the measuring place is overwritten in step 31. If further measuring places are to be assigned to a slave device, the corresponding inquiry is carried out in step 33. The corresponding dialog is shown in Fig. 10. This loop is cycled through until all measuring places have been configured and all slave devices 2₁ ... 2₁₅ have their unique addresses and their unique identifiers. Then each slave device can be uniquely addressed in the multidrop operation. For further detail, reference is made to the HART protocol.

## Claims

1. A method of automatically configuring a HART multidrop system, comprising a master device (1) and a plurality of slave devices (2, ... , 2₁₅) coupled to the at least one master device (1), wherein the method includes the steps of
a) switching on a power source (3) for connected slave devices (2₁, ... 2₁₅) in the master device (1);
b) transmitting a HART command "Write polling address" as a broadcast command from the master device (1) with a polling address not equal to zero, with the result that all slave devices (2), ... , 2₁₅) connected to the master device (1) are automatically switched to the multidrop mode and all slave devices (2₁, ... , 2₁₅) obtain an identical address not equal to zero,
c) changing the addresses for all slave devices (2₁, 2₁₅) from the identical address to a unique address for each slave device (2₁, 2₁₅).

2. The method according to claim 1, for automatically configuring an existing HART multidrop system, comprising a master device (1) and a plurality of slave devices (2₁, ... , 2₁₅) connected to the at least one master device ( I ), and which is to be complemented by at least one more slave device, wherein the method further includes the steps of
d) connecting the at least one more slave device (2₁,..., 2₁₅),
e) switching off the power source (3) for the slave devices (2₁, ... , 2₁₅) in the master device (1) if it is still switched on.

3. The method according to claim 2, wherein it is checked before step a) whether the supply voltage or the supply current for the slave devices (2₁, ... , 2₁₅) is about zero.

4. The method according to claim 2, wherein step a) is carried out after a predetermined time interval after step e), which ensures that no voltage or no current is applied to the slave devices (2₁, ... , 2₁₅) before the power source for the slave devices (2₁, ... , 2₁₅) is switched on.

5. The method according to any one of the preceding claims, wherein, in the HART command "Write polling address" transmitted as a broadcast command, the polling address has a value between 1 and 15.

6. The method according to any one of the preceding claims, wherein in step c) a unique address between 1 and 15 is input for each slave device (2₁, ... , 2₁₅) by an operator in an inquiry routine.

7. The method according to claim 6, wherein before the input of a unique address for a slave device (2₁, ... , 2₁₅) it is queried whether this slave device (2₁,... , 2₁₅) has already been configured and, if the answer is yes, the same address is again assigned to said slave device (2₁,... , 2₁₅).

8. The method according to claim 7, wherein the HART command "Write polling address" is transmitted with the identifier for said slave device (2₁, ... , 2₁₅) and the previously assigned address.

9. The method according to claim 6, wherein, together with the input of a unique address for a slave device (2₁, ... , 2₁₅), an identifier characterizing said slave device (2₁,.... 2₁₅) is input.

10. The method according to claim 9, wherein the serial number of said slave device (2₁, ..., 2₁₅) is input as said characterizing identifier.

11. A HART multidrop system, comprising:
- at least one master device (1) having a power source (3) for slave devices (2₁, 2₁₅),
- a plurality of slave devices (2), ... , 2₁₅) coupled to the at least one master device (1) and
- a control unit (4) adapted to switch on the power source (3) for the slave devices (2₁, ... ,2₁₅) in the master device (1) to automatically configure the HART multidrop system and transmits the HART command "Write polling address" as a broadcast command with a polling address not equal to zero causing all slave devices (2₁, **...,** 2₁₅) connected to the master device (1) to be automatically switched to the multidrop mode, wherein all slave devices (2₁, ... , 2₁₅) receive the identical address not equal to zero, and which also allows the identical addresses for the slave devices (2₁, ... , 2₁₅) to be changed to individual addresses for each slave device (2₁, ... , 2₁₅)... ,

12. The HART multidrop system according to claim 11, wherein the control unit (4) is adapted to check before the power supply (3) is switched on whether the supply voltage or the supply current for the slave devices (2₁,... 2₁₅) is about zero.

13. The HART multidrop system according to claim 11, wherein the control unit (4) is programmed to switch on the power supply (3) at a predetermined time interval after the switching off process, which ensures that no voltage or no current is applied to the slave devices (2₁, .... 2₁₅) before the power supply for the slave devices (2₁, ... 2₁₅) is switched on.

14. The HART multidrop system according to any one of claims I I to 13, wherein the control unit (4) can run an inquiry routine in which an operator can input a unique address of between 1 and 15 for each slave device (2₁, 2₁₅).

15. The HART multidrop system according to claim 14, wherein the control unit (4) can run a checking routine which queries before a unique address is input for a slave device (2₁, 2₁₅) whether said slave device (2₁, 2₁₅) has already been configured and, if the answer is yes, assigns the same address to said slave device (2₁,

16. The HART multidrop system according to claim 15, wherein the checking routine involves HART command "Write polling address" being transmitted with the identifier for said slave device (2₁, 2₁₅) and the previously assigned address.

17. The HART multidrop system according to claim 14, wherein an identifier characterizing said slave device (2₁, ... , 2₁₅) is input together with the input of a unique address for said slave device (2₁, ... , 2₁₅).

18. The HART multidrop system according to claim 17, wherein the serial number of said slave device (2₁, 2₁₅) is input as said characterizing identifier.

19. The HART multidrop system according to claim 11, wherein, before switching on the power source, the power source (3) of the master device (1) is switched off.

## Patentansprüche

1. Verfahren zum automatischen Konfigurieren eines HART-Mehrpunktsystems, das ein Master-Gerät (1) und mehrere Slave-Geräte (2₁, ..., 2₁₅) aufweist, die mit dem mindestens einen Master-Gerät (1) gekoppelt sind, wobei das Verfahren die folgenden Schritte beinhaltet:
a) Einschalten einer Stromquelle (3) für verbundene Slave-Geräte (2₁, ..., 2₁₅) im Master-Gerät (1);
b) Senden eines HART-Befehls "Write polling address" als Rundesendebefehl vom Master-Gerät (1) mit einer Abfrageadresse ungleich null mit dem Ergebnis, dass alle Slave-Geräte (2₁, ..., 2₁₅), die mit dem Master-Gerät (1) verbunden sind, automatisch in die Mehrpunktbetriebsart geschaltet werden und alle Slave-Geräte (2₁, ..., 2₁₅) eine identische Adresse ungleich null erhalten,
c) Ändern der Adressen für alle Slave-Geräte (2₁, ..., 2₁₅) von der identischen Adresse in eine eindeutige Adresse für jedes Slave-Gerät (2₁, ...,2₁₅).

2. Verfahren nach Anspruch 1 zum automatischen Konfigurieren eines vorhandenen HART-Mehrpunktsystems, das ein Master-Gerät (1) und mehrere Slave-Geräte (2₁, ..., 2₁₅) umfasst, die mit dem mindestens einen Master-Gerät (1) verbunden sind, und das um mindestens ein weiteres Slave-Gerät zu ergänzen ist, wobei das Verfahren ferner die folgenden Schritte beinhaltet:
d) Verbinden des mindestens einen weiteren Slave-Geräts (2₁, ..., 2₁₅),
e) Ausschalten der Stromquelle (3) für die Slave-Geräte (2₁, ..., 2₁₅) im Master-Gerät (1), falls sie noch eingeschaltet ist.

3. Verfahren nach Anspruch 2, wobei vor Schritt a) geprüft wird, ob die Versorgungsspannung oder der Versorgungsstrom für die Slave-Geräte (2₁, ..., 2₁₅) ungefähr null ist.

4. Verfahren nach Anspruch 2, wobei Schritt a) nach einem vorgegeben Zeitintervall nach Schritt e) durchgeführt wird, was sicherstellt, dass keine Spannung oder kein Strom an den Slave-Geräten (2₁, ..., 2₁₅) anliegt, bevor die Stromquelle für die Slave-Geräte (2₁, ..., 2₁₅) eingeschaltet wird.

5. Verfahren nach einem der vorhergehenden Ansprüche, wobei im HART-Befehl "Write polling address", der als Rundesendebefehl gesendet wird, die Abfrageadresse einen Wert zwischen 1 und 15 aufweist.

6. Verfahren nach einem der vorhergehenden Ansprüche, wobei in Schritt c) durch einen Operator in einer Abfrageroutine für jedes Slave-Gerät (2₁, ..., 2₁₅) eine eindeutige Adresse zwischen 1 und 15 eingegeben wird.

7. Verfahren nach Anspruch 6, wobei vor der Eingabe einer eindeutigen Adresse für ein Slave-Gerät (2₁, ..., 2₁₅) nachgefragt wird, ob dieses Slave-Gerät (2₁, ..., 2₁₅) bereits konfiguriert worden ist, und, wenn die Antwort ja ist, dem Slave-Gerät (2₁, ..., 2₁₅) wieder dieselbe Adresse zugewiesen wird.

8. Verfahren nach Anspruch 7, wobei der HART-Befehl "Write polling address" mit dem Identifikator für das Slave-Gerät (2₁, ..., 2₁₅) und der zuvor zugewiesenen Adresse gesendet wird.

9. Verfahren nach Anspruch 6, wobei zusammen mit der Eingabe einer eindeutigen Adresse für ein Slave-Gerät (2₁, ..., 2₁₅) ein Identifikator eingegeben wird, der das Slave-Gerät (2₁, ..., 2₁₅) kennzeichnet.

10. Verfahren nach Anspruch 9, wobei als der kennzeichnende Identifikator die Seriennummer des Slave-Geräts (2₁, ..., 2₁₅) eingegeben wird.

11. HART-Mehrpunktsystem, das Folgendes aufweisend:
- mindestens ein Master-Gerät (1), das eine Stromquelle (3) für Slave-Geräte (2₁, ..., 2₁₅) aufweist,
- mehrere Slave-Geräte (2₁, ..., 2₁₅), die mit dem mindestens einen Master-Gerät (1) gekoppelt sind, und
- eine Steuereinheit (4), die eingerichtet ist, die Stromquelle (3) für die Slave-Geräte (2₁, ..., 2₁₅) im Master-Gerät (1) einzuschalten, um das HART-Mehrpunktsystem automatisch zu konfigurieren, und den HART-Befehl "Write polling address" als Rundesendebefehl mit einer Abfrageadresse ungleich null sendet, wobei veranlasst wird, das alle Slave-Geräte (2₁, ..., 2₁₅), die mit dem Master-Gerät (1) verbunden sind, automatisch in die Mehrpunktbetriebsart geschaltet werten, wobei alle Slave-Geräte (2₁, ..., 2₁₅) die identische Adresse ungleich null empfangen und was außerdem ermöglicht, dass die identischen Adressen für die Slave-Geräte (2₁, ..., 2₁₅) in individuelle Adressen für jedes Slave-Gerät (2₁, ... , 2₁₅) geändert werden.

12. HART-Mehrpunktsystem nach Anspruch 11, wobei die Steuereinheit (4) eingerichtet ist, bevor die Stromversorgung (3) eingeschaltet wird, zu prüfen, ob die Versorgungsspannung oder der Versorgungsstrom für die Slave-Geräte (2₁,...,2₁₅) ungefähr null ist.

13. HART-Mehrpunktsystem nach Anspruch 11, wobei die Steuereinheit (4) programmiert ist, die Versorgungsspannung (3) zu einem vorgegebenen Zeitintervall nach dem Ausschaltvorgang einzuschalten, was sicherstellt, dass keine Spannung oder kein Strom an den Slave-Geräten (2₁, ..., 2₁₅) anliegt, bevor die Stromversorgung für die Slave-Geräte (2₁, ..., 2₁₅) eingeschaltet wird.

14. HART-Mehrpunktsystem nach einem der Ansprüche 11 bis 13, wobei die Steuereinheit (4) eine Abfrageroutine ausführen kann, in der ein Operator für jedes Slave-Gerät (2₁, ..., 2₁₅) eine eindeutige Adresse zwischen 1 und 15 eingeben kann.

15. HART-Mehrpunktsystem nach Anspruch 14, wobei die Steuereinheit (4) eine Prüfroutine ausführen kann, die, bevor eine eindeutige Adresse für ein Slave-Gerät (2₁, ..., 2₁₅) eingegeben wird, nachfragt, ob das Slave-Gerät (2₁, ..., 2₁₅₎ bereits konfiguriert worden ist, und, wenn die Antwort ja ist, dem Slave-Gerät (2₁, ..., 2₁₅) wieder dieselbe Adresse zuweist.

16. HART-Mehrpunktsystem nach Anspruch 15, wobei die Prüfroutine aufweist, dass der HART-Befehl "Write polling address" mit dem Identifikator für das Slave-Gerät (2₁, ..., 2₁₅) und der zuvor zugewiesenen Adresse gesendet wird.

17. HART-Mehrpunktsystem nach Anspruch 14, wobei zusammen mit der Eingabe einer eindeutigen Adresse für das Slave-Gerät (2₁, ..., 2₁₅) ein Identifikator eingegeben wird, der das Slave-Gerät (2₁, ... 2₁₅) kennzeichnet.

18. HART-Mehrpunktsystem nach Anspruch 17, wobei als der kennzeichnende Identifikator die Seriennummer des Slave-Geräts (2₁, ..., 2₁₅) eingegeben wird.

19. HART-Mehrpunktsystem nach Anspruch 11, wobei vor dem Einschalten der Stromquelle die Stromquelle (3) des Master-Geräts (1) ausgeschaltet wird.

## Revendications

1. Procédé consistant à configurer automatiquement un système multipoint HART, comportant un dispositif maître (1) et une pluralité de dispositifs esclaves (2₁,..., 2₁₅) couplés au au moins un dispositif maître (1), dans lequel le procédé inclut les étapes consistant à :
a) mettre sous tension une source d'alimentation (3) pour des dispositifs esclaves connectés (2₁,..., 2₁₅) dans le dispositif maître (1),
b) transmettre une instruction HART "Ecrire adresse de scrutation" en tant qu'instruction de diffusion depuis le dispositif maître (1) avec une adresse de scrutation n'étant pas égale à zéro, ayant pour résultat que tous les dispositifs esclaves (2₁,..., 2₁₅) connectés au dispositif maître (1) sont automatiquement commutés sur le mode de multipoint et tous les dispositifs esclaves (2₁,..., 2₁₅) obtiennent une adresse identique n'étant pas égale à zéro,
c) changer les adresses pour tous les dispositifs esclaves (2₁,..., 2₁₅) de l'adresse identique à une adresse unique pour chaque dispositif esclave (2₁,..., 2₁₅)_{.}

2. Procédé selon la revendication 1, pour configurer automatiquement un système multipoint HART existant, comportant un dispositif maître (1) et une pluralité de dispositifs esclaves (2₁,..., 2₁₅) connectés au au moins un dispositif maître (1), et lequel doit être complété par au moins un dispositif esclave supplémentaire, dans lequel le procédé inclut en outre les étapes consistant à :
d) connecter le au moins un dispositif esclave supplémentaire (2₁,..., 2₁₅),
e) mettre hors tension la source d'alimentation (3) pour les dispositifs esclaves (2₁,.... 2₁₅) dans le dispositif maître (1) si elle est toujours sous tension.

3. Procédé selon la revendication 2, dans lequel il est contrôlé avant l'étape a) si la tension d'alimentation ou le courant d'alimentation pour les dispositifs esclaves (2₁,..., 2₁₅) est égal à environ zéro.

4. Procédé selon la revendication 2, dans lequel l'étape a) est exécutée après un intervalle de temps prédéterminé à la suite de l'étape e), ce qui garantit qu'aucune tension ni courant n'est appliqué aux dispositifs esclaves (2₁,.... 2₁₅) avant que la source d'alimentation pour les dispositifs esclaves (2₁,..., 2₁₅) soit mise sous tension.

5. Procédé selon l'une quelconque des revendications précédentes, dans lequel, dans l'instruction HART "Ecrire adresse de scrutation" transmise en tant qu'instruction de diffusion, l'adresse de scrutation a une valeur comprise entre 1 et 15.

6. Procédé selon l'une quelconque des revendications précédentes, dans lequel à l'étape c) une adresse unique comprise entre 1 et 15 est entrée pour chaque dispositif esclave (2₁,..., 2₁₅) par un opérateur dans une routine de requête.

7. Procédé selon la revendication 6, dans lequel avant l'entrée d'une adresse unique. pour un dispositif esclave (2₁,..., 2₁₅) une requête est envoyée pour savoir si le dispositif esclave (2₁,..., 2₁₅) a déjà été configuré et, si la réponse est oui, la même adresse est à nouveau attribuée audit dispositif esclave (2₁,.... 2₁₅).

8. Procédé selon la revendication 7, dans lequel l'instruction HART "Ecrire adresse de scrutation" est transmise avec l'identifiant pour ledit dispositif esclave (2₁,..., 2₁₅) et l'adresse attribuée précédemment.

9. Procédé selon la revendication 6, dans lequel, conjointement avec l'entrée d'une adresse unique pour un dispositif esclave (2₁,..., 2₁₅), un identifiant caractérisant ledit dispositif esclave (2₁,..., 2₁₅) est entré.

10. Procédé selon la revendication 9, dans lequel le numéro de série dudit dispositif esclave (2₁,..., 2₁₅) est entrée en tant que ledit identifiant caractérisant.

11. Système multipoint HART comportant :
- au moins un dispositif maître (1) ayant une source d'alimentation (3) pour des dispositifs esclaves (2₁,..., 2₁₅),
- une pluralité de dispositifs esclaves (2₁,..., 2₁₅) couplés au au moins un dispositif maître (1), et
- une unité de commande adaptée pour mettre sous tension la source d'alimentation (3) pour les dispositifs esclaves (2₁,.... 2₁₅) dans le dispositif maître (1) afin de configurer automatiquement le système multipoint HART et transmettre l'instruction HART "Ecrire adresse de scrutation" en tant qu'instruction de diffusion avec une adresse de scrutation n'étant pas égale à zéro amenant tous les dispositifs esclaves (2₁,..., 2₁₅) connectés au dispositif maître (1) à être automatiquement commutés au mode de multipoint, dans lequel tous les dispositifs esclaves (2₁,.., 2₁₅) reçoivent l'adresse identique n'étant pas égale à zéro, et qui permit également de changer les adresses identiques pour les dispositifs esclaves (2₁,..., 2₁₅) en adresses individuelles pour chaque dispositif esclave (2₁,..., 2₁₅).

12. Système multipoint HART selon la revendication 11, dans lequel l'unité de commande (4) est adaptée pour contrôler avant de mettre sous tension la source d'alimentation (3) si la tension d'alimentation ou le courant d'alimentation pour les dispositifs esclaves (2₁,..., 2₁₅) est égal à environ zéro.

13. Système multipoint HART selon la revendication 11, dans lequel l'unité de commande (4) est programmée pour mettre sous tension la source d'alimentation (3) selon un intervalle de temps prédéterminé après le processus de mise hors tension, ce qui garantit qu'aucune tension ni courant n'est appliqué aux dispositifs esclaves (2₁,..., 2₁₅) avant la mise sous tension de la source d'alimentation pour les dispositifs esclaves (2₁,..., 2₁₅).

14. Système multipoint HART selon l'une quelconque des revendications 11 à 13, dans lequel l'unité de commande (4) peut exécuter une routine de requête dans laquelle un opérateur peut entrer une adresse unique comprise entre 1 et 15 pour chaque dispositif esclave (2₁,..., 2₁₅).

15. Système multipoint HART selon la revendication 14, dans lequel l'unité de commande (4) peut exécuter une routine de contrôle qui envoie une requête, avant qu'une adresse unique soit entrée pour un dispositif esclave (2₁,..., 2₁₅), pour savoir si ledit dispositif esclave (2₁,..., 2₁₅) a déjà été configuré et, si la réponse est oui, attribue la même adresse audit dispositif esclave (2₁,..., 2₁₅).

16. Système multipoint HART selon la revendication 15, dans lequel la routine de contrôle implique une instruction HART "Ecrire adresse de scrutation" étant transmise avec l'identifiant pour ledit dispositif esclave (2₁,..., 2₁₅) et l'adresse attribuée précédemment.

17. Système multipoint HART selon la revendication 14, dans lequel un identifiant caractérisant ledit dispositif esclave (2₁,.... 2₁₅) est entré conjointement avec l'entrée d'une adresse unique pour ledit dispositif esclave (2₁,..., 2₁₅).

18. Système multipoint HART selon la revendication 17, dans lequel le numéro de série dudit dispositif esclave (2₁,..., 2₁₅) est entré en tant que ledit identifiant caractérisant.

19. Système multipoint HART selon la revendication 11, dans lequel, avant de mettre sous tension la source d'alimentation, la source d'alimentation (3) du dispositif maître (1) est mise hors tension.
